# EUROPÄISCHE PATENTSCHRIFT

(11) **EP 3 036 164 B1**
(45) Veröffentlichungstag und Bekanntmachung des Hinweises auf die Patenterteilung: **25.09.2019**
(21) Anmeldenummer: 14758804.0
(22) Anmeldetag: 19.08.2014
(51) Int. Cl.: B64F 1/36, B65G 47/51, B65G 60/00

(54) **SPEICHERVORRICHTUNG FÜR STAPELBARE BEHÄLTER**
STORAGE DEVICE FOR STACKABLE CONTAINERS
DISPOSITIF DE STOCKAGE DE CONTENEURS EMPILABLES

(30) Priorität: 23.08.2013 DE 102013216823
(43) Veröffentlichungstag der Anmeldung: 29.06.2016
(73) Patentinhaber: Siemens Aktiengesellschaft, 80333 München (DE)
(72) Erfinder: FRITZSCHE, Roland, 90475 Nürnberg (DE); WESEMEIER, Maik, 39326 Dahlenwarsleben (DE)
(74) Vertreter: Maier, Daniel Oliver
(86) Internationale Anmeldenummer: PCT/EP2014/067661
(87) Internationale Veröffentlichungsnummer: WO 2015/024935

(56) Entgegenhaltungen:
- DE-A1- 2 138 120
- DE-A1- 2 815 459
- GB-A- 933 094
- US-A- 6 152 678

## Beschreibung

Die Erfindung betrifft eine Speichervorrichtung für stapelbare Behälter zum Befördern von Gepäckstücken in einer Sortierförderanlage eines Flughafens.

An Abflugschaltern eines Flughafens abgegebene Gepäckstücke werden mittels einer Sortierförderanlage bis zu Sortierendstellen befördert, an welchen Fahrzeuge mit Gepäckstücken für bestimmte Flugzeuge beladen werden. Zwischen Aufgabestelle und Sortierendstelle legen die Gepäckstücke dabei in der Regel größere Entfernungen automatisiert mittels Fördertechnik zurück. In großen Sortierförderanlagen erfolgt der Transport von Gepäckstücken einzeln auf je einem schalenförmigen Behälter. An den Sortierendstellen werden die Gepäckstücke von den Behältern getrennt, die dann zurückgeführt und vor einer erneuten Beladung gegebenenfalls gespeichert werden müssen. Nun ist der Bedarf an Behältern in der Sortierförderanlage oftmals unterschiedlich, zum Beispiel morgens und abends hoch, während er mittags und nachts gering ist. Durch diese Spitzenlasten eines Flughafens entsteht das Problem, dass bei geringem Bedarf eine große Anzahl an Leerbehältern in der Sortierförderanlage unbenutzt befördert wird, oder bei kurzfristig hohem Bedarf nicht genügend Leerbehälter für eine Beladung zur Verfügung stehen, da diese in der Sortierförderanlage unterwegs sind.

Aus der Offenlegungsschrift DE 34 16 928 A1 ist eine Vorrichtung zum Stapeln und Entstapeln von Behältern bekannt. Die Vorrichtung besteht aus einem Ständer, der pro Stapel ein Kragarmpaar so trägt, dass die darauf festgeklemmten und deshalb schnell austauschbaren behälterspezifischen Tragelemente den untersten Behälter des Stapels an seinem oberen Rand tragen. Unter den Stapeln ist ein in der Regel als Rollenkettenförderer ausgebildeter Querförderer angebracht, der alle Stapel miteinander verbindet und der gleichzeitig als Hubgerüst zur gleichzeitigen Bedienung aller Stapel dient. Das Hubgerüst wird mit bekannten Führungselementen im Ständer geführt und mit ebenfalls bekannten Spindelantrieben gehoben beziehungsweise abgesenkt. Die Bedienung der Stapel von unten ermöglicht eine kleine Bauhöhe der Vorrichtung sowie eine Durchführung des Materialflusses unter den Stapeln hindurch.

Die Übersetzung DE 699 17 028 T2 der europäischen Patentschrift EP 1 091 895 B1 offenbart ein Transportsystem zum Transportieren von Artikeln, wie etwa Gepäck auf einem Flughafen, in dem eine Stauvorrichtung zum Lagern und Vorsortieren von zumindest einem Teil des Artikelflusses durch das System vorgesehen ist. Jeder Artikel weist eine Ablage auf, die mindestens einen Gegenstand befördert. Das Transportsystem weist einen ersten Förderer zum Transportieren von Artikeln von der Verladestation zu einer Artikel-Lageranordnung und einen zweiten Förderer zum Transportieren von Artikeln von der Artikel-Lageranordnung zu der Entladestation auf. Die Artikel-Lageranordnung weist mehrere Lagereinheiten auf. Jede Lagereinheit weist einen durch ein Rahmengestell eines Lagergestells definierten Lagerabschnitt auf, der in Richtung seines vorderen Endes geneigt ist und Stahlrollen aufweist, auf denen die Ablagen gleiten können. Jede Lagereinheit weist ferner eine Verladeeinheit zum Verladen von Ablagen in den und zum Entladen von Ablagen aus dem Lagerabschnitt und zum Verschieben von Ablagen entlang des vorderen Endes einer horizontalen Ebene des Lagerabschnittes auf. Zwischen den horizontalen Ebenen werden die Ablagen durch zwei Aufzüge bewegt, wobei ein Aufzug zum Verladen von Ablagen auf einer Seite des Lagergestells und der andere Aufzug zum Entladen von Ablagen aus dem Lagergestell auf dessen gegenüberliegender Seite angeordnet sind. Die Aufzüge sind im Wesentlichen in der gleichen vertikalen Ebene wie die Verladeeinheiten platziert.

Nachteilig an den bekannten Vorrichtungen ist, dass sie langsam arbeiten und teuer sind.

Die Offenlegungsschrift DE 21 38 120 A1 offenbart eine Vorrichtung zum Be- oder Entladen von Paletten mit Flaschenkästen oder Flaschenkartons bestehend aus einem Palettenhubtisch und einem mehrbahnigen Kastenförderer, über denen ein mit Kastenschichten-Greiferköpfen bestückter Wagen hin- und herfahrbar ist. Beiderseits des Endstückes des mehrbahnigen Kastenförderers ist je ein unabhängig vom anderen steuerbarer Palettenhubtisch vorgesehen. Der Wagen weist quer zu der Förderrichtung des Kastenförderers zwei vollständige Kastenschichten-Greiferköpfe auf, die je mit voneinander unabhängig steuerbaren Greiferelementen versehen sind zum Fassen der Kastenschichten.

Die DE 21 38 120 A1 offenbart demnach einen Hubförderer mit einer zwischen einer oberen Förderebene und einer unteren Förderebene verfahrbaren Behälteraufnahme zur Ablage mindestens eines Behälters, wobei die Behälteraufnahme durch eine Palette gebildet wird, einen in der oberen Förderebene angeordneten Zuförderer zum Zuführen von zu speichernden Behältern bis zu einer Übernahmeposition, einen in der oberen Förderebene angeordneten Abförderer zum Abführen von Behältern von einer Übergabeposition, und eine Umsetzeinrichtung zum Umsetzen eines Behälters von der Übernahmeposition auf die leere Behälteraufnahme oder auf den jeweils obersten auf der Behälteraufnahme abgelegten Behälter sowie zum Umsetzen des obersten auf der Behälteraufnahme abgelegten Behälters auf die Übergabeposition, wobei eine Steuereinrichtung zur Ansteuerung der Behälteraufnahme des Hubförderers vorgesehen ist, die derart eingerichtet ist, dass die Behälteraufnahme zum Umsetzen eines Behälters von der Übernahmeposition soweit nach oben verfahren wird, bis der von der Umsetzeinrichtung ergriffene Behälter auf die leere Behälteraufnahme ablegbar oder auf den obersten auf ihr abgelegten Behälter aufstapelbar ist.

Der Erfindung liegt daher die Aufgabe zugrunde eine Speichervorrichtung für Behälter bereitzustellen, die die vorgenannten Nachteile nicht aufweist auf einfache Weise Leerbehälter schnell und kostengünstig aufnehmen, speichern und zurückführen kann.

Erfindungsgemäß wird die Aufgabe gelöst durch eine Speichervorrichtung für stapelbare Behälter zum Befördern von Gepäckstücken und die Verwendung dieser Speichervorrichtung in einer Sortierförderanlage eines Flughafens gemäß Patentanspruch 1 bzw. Patentanspruch 10.

Die Speichervorrichtung umfasst einen Hubförderer mit einer zwischen einer oberen Förderebene und einer unteren Förderebene verfahrbaren Behälteraufnahme zur Ablage mindestens eines Behälters. Dabei kann es sich um genau eine untere Förderebene oder auch um mehrere übereinander angeordnete untere Förderebenen handeln. Die Speichervorrichtung umfasst außerdem einen in der oberen Förderebene angeordneten Zuförderer zum Zuführen von zu speichernden Behältern bis zu einer Übernahmeposition und einen in der oberen Förderebene angeordneten Abförderer zum Abführen von Behältern von einer Übergabeposition. Ferner umfasst die Speichervorrichtung eine Umsetzeinrichtung zum Umsetzen eines Behälters von der Übernahmeposition auf die leere Behälteraufnahme oder auf den jeweils obersten auf der Behälteraufnahme abgelegten Behälter sowie zum Umsetzen des obersten auf der Behälteraufnahme abgelegten Behälters auf die Übergabeposition. Durch die Aufteilung des Transports von einzelnen Behältern in der oberen Förderebene und des Transports von mehreren gestapelten Behältern in der unteren Förderebene oder in den unteren Förderebenen können Bewegungen eingespart beziehungsweise parallelisiert werden, so dass das Stapeln und Entstapeln einfacher und schneller abgewickelt werden kann. Ein komplettes Anheben von Behälterstapeln zum Hinzufügen oder Abziehen von Behältern entfällt. Die Speichervorrichtung gewinnt an Leistung bei moderatem Preisanstieg im Vergleich zu bekannten Lösungen.

Die Behälteraufnahme weist einen Querförderer auf, mittels dessen auf der unteren Förderebene ein Behälterstapel an abgelegten Behältern von der Behälteraufnahme an Transportmittel übergebbar oder von diesen übernehmbar ist. Die Querförderrichtung ist quer zur Hubförderrichtung gerichtet und kann sowohl parallel als auch senkrecht zur Förderrichtung in der oberen Förderebene liegen. Hierdurch können Behälterstapel, die eine vorgegebene Anzahl an Behältern aufweisen, entkoppelt vom Transport einzelner Behälter auf der oberen Förderebene ausgeschleust werden. Dabei kann der Querförderer mit Vorteil reversierbar ausgebildet sein. Die Transportmittel können an beiden Enden des Querförderers angeordnet sein, so dass Behälterstapel wahlweise zu beiden Seiten des Querförderers übernommen oder übergeben werden können.

In einer bevorzugten Ausgestaltung der erfindungsgemäßen Speichervorrichtung sind die Transportmittel als reversierbarer Pufferförderer zum dynamischen Speichern von Behälterstapeln ausgebildet. Dem Pufferförderer werden nacheinander zu speichernde Behälterstapel zugeführt, wobei bei Bedarf an leeren Behältern der jeweils zuletzt gepufferte Behälterstapel als erster wieder dem Hubförderer zugeführt wird.

In einer ebenfalls bevorzugten Ausgestaltung der erfindungsgemäßen Speichervorrichtung sind die Transportmittel als Transportfahrzeug zum Transport von Behälterstapeln zwischen dem Hubförderer und einem stationären Behälterpuffer ausgebildet. Das als Verteilerwagen ausgebildete Transportfahrzeug befördert Behälterstapel beispielsweise zu Stützböcken, die als stationäre Behälterpuffer dienen.

Mittels des Querförderers ist auf der oberen Förderebene ein Behälter zwischen Übernahmeposition und Übergabeposition ohne Umsetzeinrichtung transportierbar. Hierdurch ist ein kontinuierlicher und damit zügiger Transport eines nicht zu speichernden Behälters vom Zuförderer zum Abförderer möglich.

In einer bevorzugten Ausführungsform der erfindungsgemäßen Speichervorrichtung sind die Behälter reversierbar ausgebildet und der Abförderer durch den Zuförderer sowie die Übergabeposition durch die Übernahmeposition gebildet. Hierbei können mit Vorteil separate Zu- und Abförderer eingespart und durch einen einzigen Förderer zum Zu- und Abführen von Behältern gebildet werden.

In einer weiteren vorteilhaften Ausführungsform der erfindungsgemäßen Speichervorrichtung ist die Umsetzeinrichtung als parallel zur oberen Förderebene verfahrbarer Schlitten mir ansteuerbaren Greifelementen ausgebildet, welche zum Umsetzten eines Behälters mit diesem in Eingriff bringbar sind. Der Schlitten kann durch eine Fördertechnik, beispielsweise durch einen Riementrieb, verfahren werden. Die Greifelemente sind an die äußere Form der Behälter angepasst und heben den Behälter beim Schließen leicht an und senken diesen beim Öffnen wieder ab.

Die Speichervorrichtung umfasst eine Steuereinrichtung zur Ansteuerung der Behälteraufnahme des Hubförderers, die derart eingerichtet ist, dass die Behälteraufnahme zum Umsetzen eines Behälters von der Übernahmeposition soweit nach oben verfahren wird, bis der von der Umsetzeinrichtung ergriffene Behälter auf die leere Behälteraufnahme ablegbar oder auf den obersten auf ihr abgelegten Behälter aufstapelbar ist. Auf diese Weise kann ein weiterer Behälter zur Ablage positioniert werden, ohne dass Greifelemente und Behälter kollidieren. Der oberste Behälter des Stapels befindet sich in einer Warteposition direkt unter der oberen Förderebene.

Vorzugsweise ist die Steuereinrichtung der erfindungsgemäßen Speichervorrichtung ferner derart eingerichtet ist, dass die Behälteraufnahme zum Umsetzen des obersten auf ihr abgelegten Behälters zu der Übergabeposition soweit nach oben verfahren wird, bis der oberste Behälter von der Umsetzeinrichtung ergreifbar ist.

Weitere Eigenschaften und Vorteile der erfindungsgemäßen Speichervorrichtung ergeben sich aus nachfolgender Beschreibung anhand der Zeichnungen, in deren
- FIG 1: eine erfindungsgemäße Speichervorrichtung in Seitenansicht,
- FIG 2: die Speichervorrichtung aus FIG 1 in Draufsicht und
- FIG 3-10: die Speichervorrichtung aus FIG 1 und 2 in perspektivischer Ansicht in verschiedenen Arbeitsschritten bei der Behälterspeicherung
schematisch veranschaulicht sind.

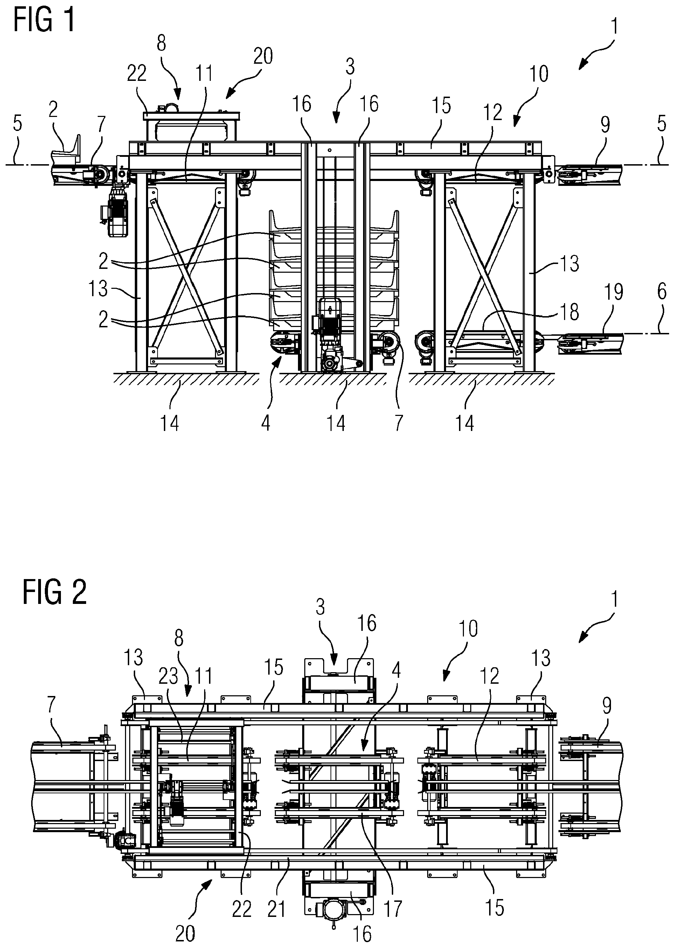

Gemäß FIG 1 und 2 umfasst eine Speichervorrichtung 1 für stapelbare Behälter 2 einen Hubförderer 3 mit einer verfahrbaren Behälteraufnahme 4 zur Ablage mindestens eines Behälters 2. Die Behälteraufnahme 4 ist zwischen einer oberen Förderebene 5 und mindestens einer unterhalb dieser angeordneten, unteren Förderebene 6 vertikal und kontinuierlich verfahrbar. In der oberen Förderebene 5 sind ein Zuförderer 7 zum Zuführen von zu speichernden Behältern 2 bis zu einer Übernahmeposition 8 sowie ein Abförderer 9 zum Abführen von gespeicherten Behältern 2 von einer Übergabeposition 10 angeordnet. Ebenfalls in der oberen Förderebene 5 sind an der Übernahmeposition 8 ein Übernahmeförderer 11 und an der Übergabeposition 10 ein Übergabeförderer 12 angeordnet, die von zwei sich über Traggestelle 13 auf einer Bodenstruktur 14 abstützenden Längsträgern 15 getragen werden. Die Längsträger 15 sind horizontal und parallel zueinander ausgerichtet. Der Hubförderer 3 ist zwischen der Übernahmeposition 8 und der Übergabeposition 10 angeordnet und weist vertikale Stützen 16 auf, deren untere Enden auf der Bodenstruktur 14 stehen und deren obere Enden mit den Längsträgern 15 verbunden sind. Die Behälteraufnahme 4 des Hubförderers 3 weist einen Querförderer 17 auf, mittels dessen Behälter 2 auf der oberen Förderebene 5 vom Übernahmeförderer 11 übernommen oder an den Übergabeförderer 12 übergeben werden können. Auf der unteren Fördereben 6 - im Ausführungsbeispiel ist aus Übersichtsgründen nur eine einzige dargestellt, es können aber auch mehrere untere Förderebenen 6 auf unterschiedlichen Förderniveaus vorgesehen sein - ist ein unterer Übergabeförderer 18 angeordnet, an den einzelne oder mehrere gestapelte Behälter 2 durch den Querförderer 17 auf der unteren Förderebene 6 übergebbar sind. Nicht zeichnerisch dargestellt, aber ebenfalls realisierbar ist ein weiterer Übergabeförderer auf der anderen Seite des Querförderers 17. Auf der unteren Förderebene 6 sind ferner als reversierbarer Pufferförderer 19 ausgebildete Transportmittel angeordnet, die zur dynamischen Speicherung von gestapelten Behältern 2 vorgesehen sind. Diese können in Fortsetzung eines oder beider Übergabeförderer 18 angeordnet sein. An den Längsträgern 15 ist eine Umsetzeinrichtung 20 zum Umsetzen eines Behälters 2 auf der oberen Förderebene 5 zwischen Übernahmeposition 8, Hubförderer 3 und Übergabeposition 10 angeordnet. Die Umsetzeinrichtung 20 weist einen mittels einer Fördertechnik 21 parallel zur oberen Förderebene 5 verfahr-baren Schlitten 22 mit ansteuerbaren Greifelementen 23 auf. Die Greifelemente 23 sind zum Umsetzten eines Behälters 2 mit diesem in Eingriff bringbar, wobei der Behälter 2 anhebbar und beim Außereingriffbringen wieder absenkbar ist. Erfindungsgemäß werden in der oberen Förderebene 5 einzelne Behälter 2 transportiert, die bei Bedarf auf die Behälterauf-nahme 4 des Hubförderers 3 abgelegt beziehungsweise übereinander aufgestapelt werden. Hat der Stapel von Behältern 2 auf der Behälteraufnahme 4 eine vorgebbare Anzahl beziehungsweise Höhe erreicht, so wird dieser erfindungsgemäß in der unteren Förderebene 6 im dynamischen Pufferförderer 19 oder mittels nicht dargestellter Transportfahrzeuge in einen stationären Behälterpuffer transportiert.

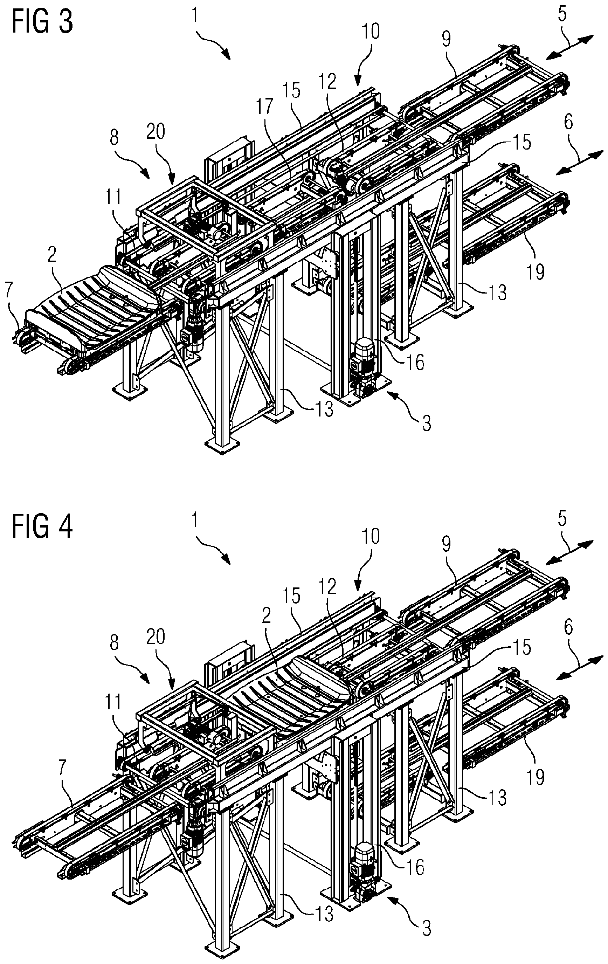

FIG 3 bis 10 verdeutlichen den Bewegungsablauf der leeren Behälter 2 sowie die hierfür von der erfindungsgemäßen Speichervorrichtung 1 ausgeführten Arbeitsschritte.
Ein an einer Sortierendstelle einer Sortierförderanlage eines Flughafens vom beförderten Gepäckstück getrennter und damit leerer Behälter 2 wird der Speichervorrichtung 1 gemäß FIG 3 auf der oberen Förderebene 5 mittels des Zuförderers 7 zugeführt. Soll keine Speicherung des Behälters 2 erfolgen, so ist die Behälteraufnahme 4 des Hubförderers 3 nach oben gefahren, so dass Zuförderer 7, Übernahmeförderer 11, Querförderer 17, Übergabeförderer 12 und Abförderer 9 hintereinander geschaltet sind und auf der oberen Förderebene 5 einen durchgehenden Förderweg bilden. Der leere Behälter 2 kann auf diese Weise vom Abförderer 9 direkt in Richtung einer Beladestelle, beispielsweise im Bereich der Gepäckaufgabe des Flughafens, transportiert werden. Die Umsetzeinrichtung 20 ruht hierbei inaktiv in der Übernahmeposition 8.

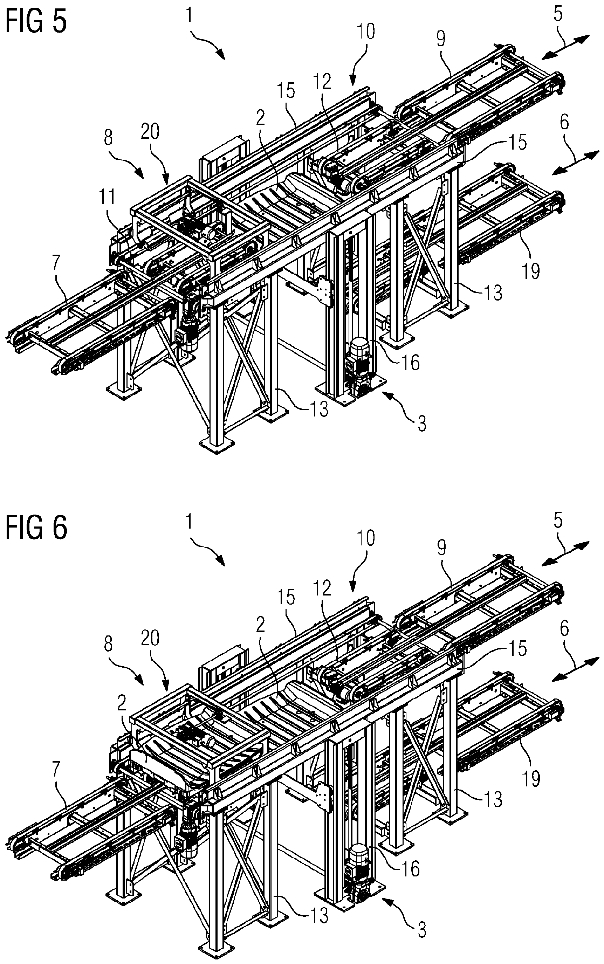

Zur Speicherung von leeren Behältern 2, beispielsweise während Betriebszeiten, zu denen mehr leere Behälter 2 über den Zuförderer 7 ankommen als über den Abförderer 9 abgezogen werden, werden gemäß FIG 4 bis 10 Stapel an Behältern 2 auf der Behälteraufnahme 4 des Hubförderers 3 gebildet. Zu Beginn der Stapelbildung ist die leere Behälteraufnahme 4 des Hubförderers 3 wie in FIG 3 nach oben gefahren. Die Steuerung der Speichervorrichtung 1 stoppt den Behälter 2 gemäß FIG 4, wenn dieser auf den Querförderer 17 der Behälteraufnahme 4 transportiert ist. Anschließend wird die Behälteraufnahme 4 durch den Hubförderer 3 soweit nach unten gefahren, bis der abgelegte Behälter 2 gemäß FIG 5 unterhalb der oberen Förderebene 5 abgesenkt ist.

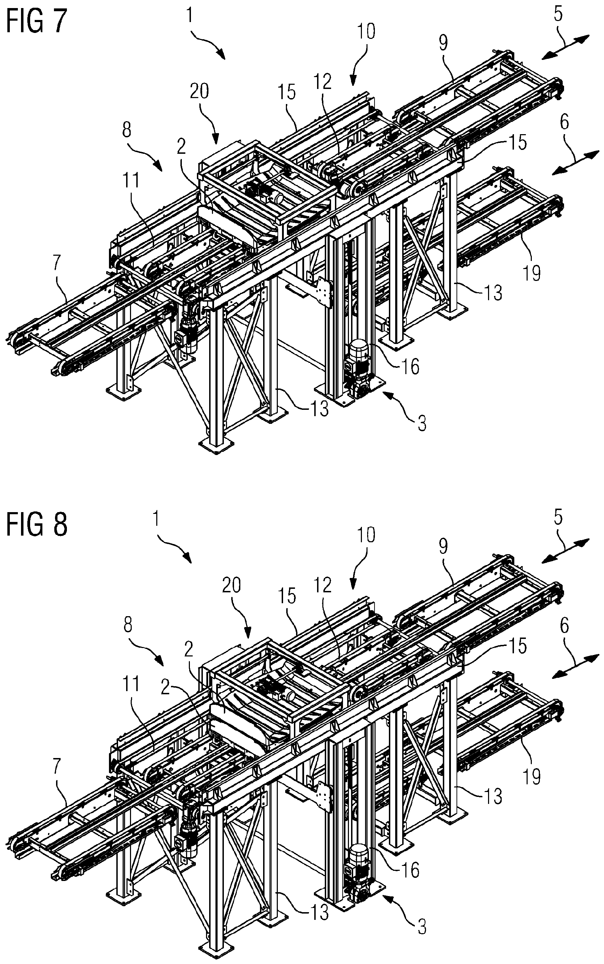

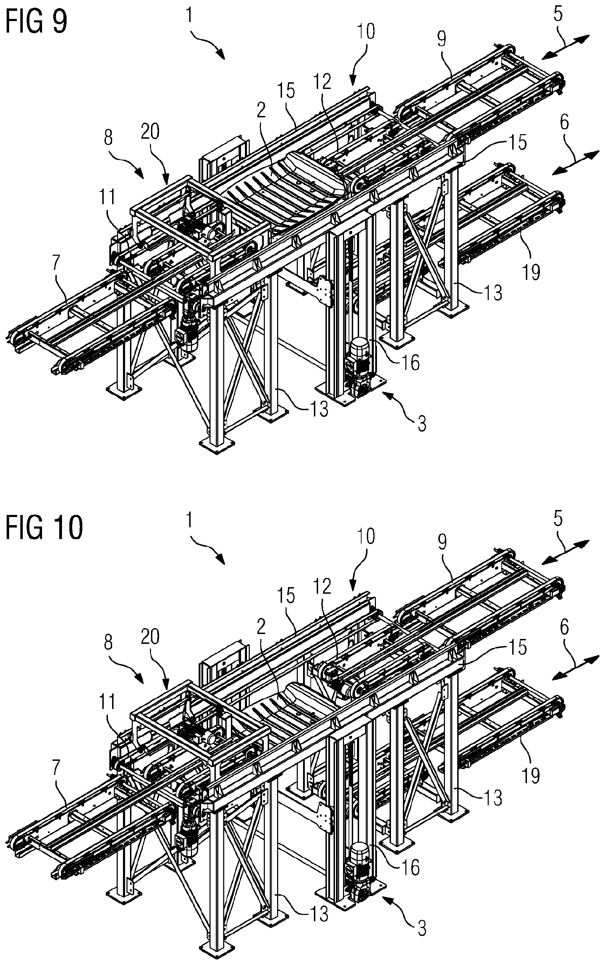

Jeder weitere zugeführte Behälter 2 wird mittels des Zuförderers 7 und des Übernahmeförderers 11 gemäß FIG 6 bis zur Übernahmeposition 8 transportiert. Dort werden die Greifelemente 23 der Umsetzeinrichtung 20 mit dem weiteren Behälter 2 in Eingriff gebracht, wodurch dieser vom Übernahmeförderer 11 abgehoben wird. Der Schlitten 22 der Umsetzeinrichtung 20 wird nun bis zum Hubförderer 3 verfahren, wodurch der weitere Behälter 2 gemäß FIG 7 soweit transportiert wird, bis er über dem bereits auf der Behälteraufnahme 4 liegenden, ersten Behälter 2 angeordnet ist. Nun fährt der Hubförderer 3 die Behälteraufnahme 4 und damit den ersten Behälter 2 nach oben, während die Greifelemente 23 der Umsetzeinrichtung 20 außer Eingriff vom weiteren Behälter 2 gebracht werden. Gemäß FIG 8 kommt der weitere Behälter 2 auf dem ersten beziehungsweise obersten Behälter 2 auf der Behälteraufnahme 4 zu liegen. Dabei ist die Form der Behälter 2 derart ausgebildet, dass diese aufeinanderliegend einen stabilen Stapel bilden können. Um beim Zurückfahren des Schlittens 22 in die Übernahmeposition 8 gemäß FIG 9 eine Kollision zwischen den Greifelementen 23 und den abgelegten Behältern 2 zu vermeiden, darf dabei weder die Behälteraufnahme 4 nach unten gefahren werden noch dürfen die Greifelemente 23 in die Eingriffsstellung verbracht werden. In der Zwischenzeit kann bereits ein weiterer, nicht dargestellter Behälter 2 der Übernahmeposition 8 zugeführt werden. Sobald der Schlitten 22 aus dem Bereich des Hubförderers 3 gefahren ist, fährt der Hubförderer 3 die Behälteraufnahme 4 soweit nach unten, bis der weitere, nun oberste Behälter 2 des Stapels gemäß FIG 10 unterhalb der oberen Förderebene 5 abgesenkt ist.

Nachdem ein Stapel von beispielsweise vier leeren Behältern 2 gebildet ist, fährt der Hubförderer 3 die Behälteraufnahme 4 gemäß FIG 1 auf die untere Förderebene 6 hinab. Mittels des Querförderers 17 und des unteren Übergabeförderers 19 wird der Stapel von Behältern 2 an Transportmittel übergeben. Die Transportmittel können als reversierbare Pufferförderer 19 ausgebildet sein, die Stapel von Behältern 2 dynamisch speichern. Die Transportmittel können aber auch als Transportfahrzeuge ausgebildet sein, die Stapel von Behältern 2 zu statischen Behälterpuffern - etwa zu Stützböcken - transportieren.

Die Entstapelung der Behälterstapel 2 erfolgt in umgekehrter Reihenfolge der Arbeitsschritte zur Stapelbildung und Speicherung, nur dass der jeweils oberste Behälter 2 des Stapels durch die Umsetzeinrichtung 20 von der Behälteraufnahme 4 auf die Übergabeposition 10 umgesetzt und dort auf den Übergabeförderer 12 abgelegt wird.

Sind die Behälter 2 reversierbar ausgebildet, so kann in vorteilhafter Weise der Übergabeförderer 12 entfallen und durch den Übernahmeförderer 11 gebildet sowie der Abförderer 9 entfallen und durch den Zuförderer 7 gebildet werden.

Durch die erfindungsgemäße Aufteilung einzelner Behälter in der oberen Förderebene 5 und mehrerer gestapelter Behälter 2 in der unteren Förderebene 6 ist der Zugang zu Pufferförderern 19 oder Behälterpuffern entkoppelt. Die Speichervorrichtung 1 kann nach dem Prinzip arbeiten, wonach der zuletzt auf den Stapel abgelegte Behälter 2 derjenige ist, der bei Bedarf vom Stapel entnommen wird. Hierdurch können Bewegungsabläufe eingespart beziehungsweise parallelisiert werden. So ist es nicht erforderlich, etwa den gesamten Stapel an Behältern 2 anzuheben, um einen weiteren Behälter 2 hinzufügen zu können. Der Schlitten 22 fährt schon wieder in die Übernahmeposition 8, während die Behälteraufnahme 4 nach unten gefahren wird. Die Leistung einer erfindungsgemäßen Speichervorrichtung 1 ist deutlich höher als bei bekannten Vorrichtungen, die Kosten nur unwesentlich.

Durch die Entkopplung der Förderebenen für einzelne und gestapelte Behälter 2 können auch die Pufferbahnen nach dem Prinzip gestalten, dass der zuletzt gespeicherte Behälterstapel derjenige ist, der bei Bedarf aus einer Pufferbahn zuerst wieder abgezogen wird. Dabei ist es ein großer Vorteil, dass die Behälterstapel nicht im Hauptstrom des Materialflusses weitergetaktet werden müssen, sondern sich nur für den Zeitraum des Stapelns oder Entstapelns bewegen. Das führt zu erheblichen Einsparungen von Energie, Verschleiß und Wartungsaufwand, insbesondere wenn man die erfindungsgemäße Lösung mit bekannten Lösungen vergleicht, bei welchen Pfufferlinien für einzelne Behälter vorgesehen sind oder bei welchen einzelne Behälter permanent in der Förderanlage kreisen.

Ein weiterer Vorteil liegt auch darin, dass die erfindungsgemäße Speichervorrichtung gleichermaßen für das Stapeln und Entstapeln verwendet werden kann, da diese Vorgänge oft nicht gleichzeitig stattfinden.

Weiterhin ist die erfindungsgemäße Speichervorrichtung nicht nur für Behälter zum Transport von Gepäckstücken geeignet, sondern für Stückgüter aller Art, also auch für Distributions-, Post- und Paketlogistik.

Je nach Größe der Sortierförderanlage können mehrere erfindungsgemäße Speichervorrichtungen 1 parallel geschaltet werden, um die Durchsatzleistung an leeren Behältern beziehungsweise Behälterstapeln zu erhöhen. Ebenso könne Speichervorrichtungen hintereinander geschaltet werden, um die Speicherkapazität für Behälterstapel zu erhöhen. Durch die geeignete Parallel- und Hintereinanderschaltung erfindungsgemäßer Speichervorrichtungen können Sortierförderanlagen mit vorgegebener Durchsatzleistung und Speicherkapazität gestaltet werden.

## Patentansprüche

1. Speichervorrichtung (1) für stapelbare Behälter (2) zum Befördern von Gepäckstücken in einer Sortierförderanlage eines Flughafens, umfassend einen Hubförderer (3) mit einer zwischen einer oberen Förderebene (5) und einer unteren Förderebene (6) verfahrbaren Behälteraufnahme (4) zur Ablage mindestens eines Behälters (2), einen in der oberen Förderebene (5) angeordneten Zuförderer (7) zum Zuführen von zu speichernden Behältern (2) bis zu einer Übernahmeposition (8), einen in der oberen Förderebene (5) angeordneten Abförderer (9) zum Abführen von Behältern (2) von einer Übergabeposition (10), und eine Umsetzeinrichtung (20) zum Umsetzen eines Behälters (2) von der Übernahmeposition (8) auf die leere Behälteraufnahme (4) oder auf den jeweils obersten auf der Behälteraufnahme (4) abgelegten Behälter (2) sowie zum Umsetzen des obersten auf der Behälteraufnahme (4) abgelegten Behälters (2) auf die Übergabeposition (10), wobei die Behälteraufnahme (4) einen Querförderer (17) aufweist, mittels dessen auf der unteren Förderebene (6) ein Behälterstapel an abgelegten Behältern (2) von der Behälteraufnahme (4) an Transportmittel übergebbar oder von diesen übernehmbar ist, und
umfassend eine Steuereinrichtung zur Ansteuerung der Behälteraufnahme (4) des Hubförderers (3), die derart eingerichtet ist, dass die Behälteraufnahme (4) zum Umsetzen eines Behälters (2) von der Übernahmeposition (8) soweit nach oben verfahren wird, bis der von der Umsetzeinrichtung (20) ergriffene Behälter (2) auf die leere Behälteraufnahme (4) ablegbar oder auf den obersten auf ihr abgelegten Behälter (2) aufstapelbar ist.

2. Speichervorrichtung (1) nach Anspruch 1, wobei die Transportmittel als reversierbarer Pufferförderer (19) zum dynamischen Speichern von Behälterstapeln ausgebildet sind.

3. Speichervorrichtung (1) nach Anspruch 1, wobei die Transportmittel als Transportfahrzeug zum Transport von Behälterstapeln zwischen dem Hubförderer (3) und einem stationären Behälterpuffer ausgebildet sind.

4. Speichervorrichtung (1) nach einem der Ansprüche 1 bis 3, wobei mittels des Querförderers (17) auf der oberen Förderebene (5) ein Behälter (2) zwischen Übernahmeposition (8) und Übergabeposition (10) ohne Umsetzeinrichtung (20) transportierbar ist.

5. Speichervorrichtung (1) nach einem der Ansprüche 1 bis 4, wobei die Behälter (2) reversierbar ausgebildet sind und der Abförderer (9) durch den Zuförderer (7) sowie die Übergabeposition (10) durch die Übernahmeposition (8) gebildet sind, so dass die Speichervorrichtung (1) einen einzigen Förderer zum Zu- und Abführen von Behältern (2) aufweist.

6. Speichervorrichtung (1) nach einem der Ansprüche 1 bis 5, wobei die Umsetzeinrichtung (20) als parallel zur oberen Förderebene (5) verfahrbarer Schlitten (22) mit ansteuerbaren Greifelementen (23) ausgebildet ist, welche zum Umsetzten eines Behälters (2) mit diesem in Eingriff bringbar sind.

7. Speichervorrichtung (1) nach Anspruch 1, wobei die Steuereinrichtung derart eingerichtet ist, dass die Behälteraufnahme (4) zum Umsetzen des obersten auf ihr abgelegten Behälters (2) zu der Übergabeposition (10) soweit nach oben verfahren wird, bis der oberste Behälter (2) von der Umsetzeinrichtung (20) ergreifbar ist.

8. Speichervorrichtung (1) nach Anspruch 1, wobei der Zuförderer(7) nicht mit dem Abförderer (9) übereinstimmt und die Übernahmeposition (8) nicht mit der Übergabeposition (10) übereinstimmt.

9. Speichervorrichtung (1) nach Anspruch 8, wobei der Zuförderer (7) und der Abförderer (9) übereinstimmende Förderrichtungen aufweisen.

10. Verwendung einer Speichervorrichtung (1) nach einem der Ansprüche 1 bis 9 in einer Sortierförderanlage eines Flughafens.

## Claims

1. Storage device (1) for stackable containers (2) for conveying items of luggage in a sorting conveyor system in an airport, comprising a lifting conveyor (3) with a container receiving device (4) able to be moved between an upper conveying plane (5) and a lower conveying plane (6), for storing at least one container (2), a feed conveyor (7) arranged in the upper conveyor plane (5) for feeding containers (2) to be stored to a receiving position (8), a discharge conveyor (9) arranged in the upper conveying plane (5) for discharging containers (2) from a transfer position (10), and a moving device (20) for moving a container (2) from the receiving position (8) onto the empty container receiving device (4) or onto the respective container (2) deposited at the top on the container receiving device (4) as well as for moving the container (2) deposited at the top on the container receiving device (4) to the transfer position (10), wherein the container receiving device (4) has a transverse conveyor (17), by means of which, on the lower conveying plane (6) a stack of stored containers (2) is able to be transferred from the container receiving device (4) to transport means or is able to be received from said means, and
comprising a control device for controlling a container receiving device (4) of the lifting conveyor (3), which are configured such that the container receiving device (4), for moving a container (2), is moved from the receiving position (8) far enough upwards for the container (2) gripped by the moving device (20) to be deposited on the empty container receiving device (4) or to be stacked on the uppermost container (2) stored on said device.

2. Storage device (1) according to claim 1, wherein the transport means is embodied as a reversible buffer conveyor (19) for dynamic storage of container stacks.

3. Storage device (1) according to claim 1, wherein the transport means is embodied as a transport vehicle for transporting container stacks between the lifting conveyor (3) and a stationary container buffer.

4. Storage device (1) according to one of claims 1 to 3, wherein a container (2) is able to be transported between receiving position (8) and transfer position (10) without the moving device (20) by means of a transverse conveyor (17) on the upper conveying plane (5).

5. Storage device (1) according to one of claims 1 to 4, wherein the containers (2) are embodied reversibly and the discharge conveyor (9) is formed by the feed conveyor (7) and also the transfer position (10) is formed by the receiving position (8), so that the storage device (1) has a single conveyor for feed conveying and discharge conveying of containers (2).

6. Storage device (1) according to one of claims 1 to 5, wherein the moving device (20) is embodied as a carriage (22) able to be moved in parallel to the upper conveying plane (5) with controllable gripper elements (23) which, to move a container (2), are able to be engaged with said container.

7. Storage device (1) according to claim 1, wherein the control device is configured such that the container receiving device (4), to move the uppermost container (2) stored on it to the transfer position (10), is moved upwards far enough for the uppermost container (2) to be able to be gripped by the moving device (20).

8. Storage device (1) according to claim 1, wherein the feed conveyor (7) does not correspond to the discharge conveyor (9) and the receiving position (8) does not correspond to the transfer position (10).

9. Storage device (1) according to claim 8, wherein the feed conveyor (7) and the discharge conveyor (9) have corresponding conveying directions.

10. Use of a storage device (1) according to one of claims 1 to 9 in a sorting conveyor system in an airport.

## Revendications

1. Dispositif de stockage (1) de conteneurs (2) empilables pour le convoyage de bagages dans l'installation de convoyage sélectif d'un aéroport, comprenant un élévateur (3) avec un logement de conteneur (4) pouvant être déplacé entre un plan de convoyage supérieur (5) et un plan de convoyage inférieur (6) pour déposer au moins un conteneur (2), un convoyeur d'amenée (7) disposé dans le plan de convoyage supérieur (5) pour amener des conteneurs (2) à stocker jusqu'à une position de réception (8), un convoyeur d'évacuation (9) disposé dans le plan de convoyage supérieur (5) pour évacuer les conteneurs (2) depuis une position de transfert (10) et un dispositif de transfert (20) pour transférer un conteneur (2) depuis la position de réception (8) sur le logement de conteneur (4) vide ou sur le conteneur (2) déposé respectivement le plus haut sur le logement de conteneur (4), ainsi que pour transférer le conteneur (2) déposé le plus haut sur le logement de conteneur (4) dans la position de transfert (10), le logement de conteneur (4) présentant un convoyeur transversal (17) au moyen duquel, sur le plan de convoyage inférieur (6), une pile de conteneurs (2) déposés peut être transférée du logement de conteneur (4) au moyen de transport, ou reçue de celui-ci,
et
comprenant un dispositif de commande pour commander le logement de conteneur (4) de l'élévateur (3), qui est agencé de sorte que, pour transférer un conteneur (2) depuis la position de réception (8), le logement de conteneur (4) est déplacé vers le haut jusqu'à ce que le conteneur (2) saisi par le dispositif de transfert (20) puisse être déposé sur le logement de conteneur (4) vide ou empilé sur le conteneur (2) disposé le plus haut sur celui-ci.

2. Dispositif de stockage (1) selon la revendication 1, dans lequel les moyens de transport sont conçus comme des convoyeurs à tampon réversibles (19) pour le stockage dynamique de piles de conteneurs.

3. Dispositif de stockage (1) selon la revendication 1, dans lequel les moyens de transport sont conçus comme des véhicules de transport pour le transport de piles de conteneurs entre l'élévateur (3) et un tampon à conteneur fixe.

4. Dispositif de stockage (1) selon l'une quelconque des revendications 1 à 3, dans lequel, au moyen du convoyeur transversal (17), un conteneur (2) peut être transporté sur le plan de convoyage supérieur (5) entre la position de réception (8) et la position de transfert (10) sans dispositif de transfert (20).

5. Dispositif de stockage (1) selon l'une quelconque des revendications 1 à 4, dans lequel les conteneurs (2) sont conçus de manière réversible et le convoyeur d'évacuation (9) par l'intermédiaire du convoyeur d'amenée (7) ainsi que la position de transfert (10) par l'intermédiaire de la position de réception (8) sont formés de sorte que le dispositif de stockage (1) présente un seul et même convoyeur pour l'amenée et l'évacuation des conteneurs (2).

6. Dispositif de stockage (1) selon l'une quelconque des revendications 1 à 5, dans lequel le dispositif de transfert (20) est conçu comme un chariot (22) pouvant être déplacé parallèlement au plan de convoyage supérieur (5) avec des éléments de préhension (23) commandables, qui peuvent être mis en prise avec un conteneur (2) pour transférer celui-ci.

7. Dispositif de stockage (1) selon la revendication 1, dans lequel le dispositif de commande est configuré de sorte que, pour transférer le conteneur (2) déposé le plus haut sur le logement de conteneur (4) vers la position de transfert (10), le logement de conteneur (4) est déplacé vers le haut jusqu'à ce que le conteneur (2) supérieur puisse être saisi par le dispositif de transfert (20).

8. Dispositif de stockage (1) selon la revendication 1, dans lequel le convoyeur d'amenée (7) ne correspond pas au convoyeur d'évacuation (9) et la position de réception (8) ne correspond pas à la position de transfert (10).

9. Dispositif de stockage (1) selon la revendication 8, dans lequel le convoyeur d'amenée (7) et le convoyeur d'évacuation (9) présentent des sens de convoyage correspondants.

10. Utilisation d'un dispositif de stockage (1) selon l'une quelconque des revendications 1 à 9 dans l'installation de convoyage sélectif d'un aéroport.
